# EUROPEAN PATENT SPECIFICATION

(11) **EP 1 376 036 B1**
(45) Date of publication and mention of the grant of the patent: **01.08.2007**
(21) Application number: 03425406.0
(22) Date of filing: 24.06.2003
(51) Int. Cl.: F25D 3/11, F25D 13/06, F04D 17/16, A23L 3/36, A23L 3/375

(54) **Deep-freezing apparatus, particularly for food products, with high efficiency of heat exchange between the cryogenic gas and the products to be frozen**
Tiefgefrieranlage, insbesondere für Lebensmittel, mit hocheffizientem Wärmeausstausch zwischen dem kryogenen Gas und dem Gefriergut
Congélateur, en particulier pour la congélation de produits alimentaires, présentant une haute efficacité d'échange thermique entre le gaz cryogénique et les produits à congeler

(30) Priority: 25.06.2002 IT MI20021394
(43) Date of publication of application: 02.01.2004
(73) Proprietor: SOL S.p.A., 20052 Monza MI (IT)
(72) Inventor: Van Damme, Fabian Dagmar Benjamin, 9500 Geraardsbergen (BE)
(74) Representative: Modiano, Micaela Nadia

(56) References cited:
- EP-A- 0 408 956
- EP-A- 1 158 177
- DE-U- 29 720 555
- US-A- 4 475 351
- US-A- 5 551 251
- US-B1- 6 167 708
- PATENT ABSTRACTS OF JAPAN vol. 2000, no. 23, 10 February 2001 (2001-02-10) -& JP 2001 174117 A (NIPPON SANSO CORP), 29 June 2001 (2001-06-29)

## Description

The present invention relates to a deep-freezing apparatus, particularly for food products, with high efficiency of heat exchange between the cryogenic gas and the products to be frozen.

As is known, the apparatuses most used for deep-freezing food products are substantially constituted by a tunnel-like structure that forms internally a deep-freezing chamber, which is provided with an inlet for the insertion of the products to be frozen and with an outlet for the exit of the frozen products. Deep-freezing apparatuses with a tunnel-like structure are generally equipped with a conveyor, for example a belt conveyor, which forms a surface for supporting the products and moving them along an advancement direction and runs from the inlet to the outlet of the deep-freezing chamber.

Inside the deep-freezing chamber there are means, for example nozzles, for dispensing a cryogenic gas, usually constituted by nitrogen, and distribution means, such as fans or the like, for distributing the cryogenic gas so as to convey the cryogenic gas onto the products that pass inside the deep-freezing chamber, which are thus cooled rapidly, deep-freezing them.

The distribution means provided in the deep-freezing chambers of known types of tunnel apparatus generate turbulence inside the deep-freezing chamber, with high speeds of the cryogenic gas but in uncontrolled directions.

EP-A-1 330 959 discloses a fan with funnel-like parts, rigidly connected to a rotating surface and shaped so as to obtain an exit gas jet accelerated at certain angles an rotating with the fan.

US-A-5 551 251 discloses an impingement freezer comprising cold air distribution means suitable to produce individual air jets through cylindical passages.

Because of this fact, the efficiency of the exchange between the cryogenic gas and the products to be frozen is found to be low. The main effects of this low efficiency are relatively long times to complete the deep-freezing cycle and a relatively high consumption of cryogenic gas.

The aim of the present invention is to solve the problem described above by providing a deep-freezing apparatus that is capable of achieving, in the heat exchange between the cryogenic gas and the products to be frozen, a higher efficiency than obtainable with known types of apparatus.

Within this aim, an object of the invention is to provide a deep-freezing apparatus that by way of such higher efficiency allows to reduce the time required to complete the deep-freezing cycle and/or the consumption of cryogenic gas.

This aim and these and other objects that will become better apparent hereinafter are achieved by a deep-freezing apparatus, comprising a tunnel-like structure that forms internally a deep-freezing chamber that is provided with an inlet and with an outlet and a conveyor for the products to be deep-frozen which runs from said inlet to said outlet and forms a surface for supporting and moving the products to be frozen along an advancement direction, said deep-freezing chamber being provided internally with main dispenser means and with means for distributing a cryogenic gas, characterized in that said means for distributing a cryogenic gas comprise at least one fan that is provided with a dispensing outlet that is arranged above said conveyor and is suitable to dispense a laminar jet of gas that is orientated substantially at right angles to said surface for supporting and moving the products.

Further characteristics and advantages of the invention will become better apparent from the description of two preferred but not exclusive embodiments of the deep-freezing apparatus according to the invention, illustrated by way of non-limitative example in the accompanying drawings, wherein:
Figure 1 is a schematic sectional view of the deep-freezing apparatus according to the invention in a first embodiment, taken along a longitudinal vertical plane;
Figure 2 is a schematic sectional view of the deep-freezing apparatus according to the invention in a second embodiment, taken along a longitudinal vertical plane;

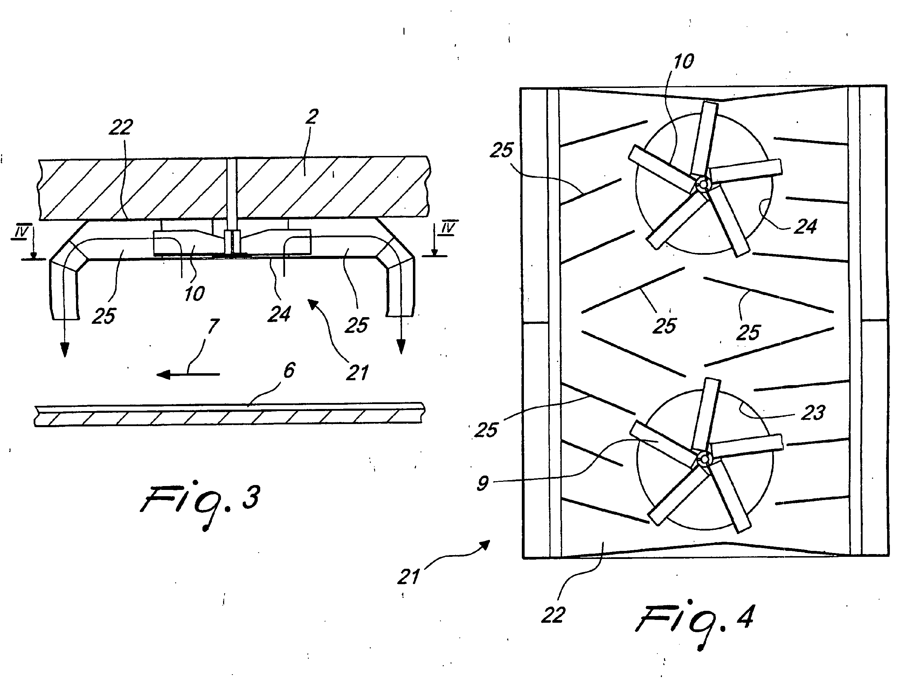

Figure 3 is an enlarged-scale sectional view of a detail of Figures 1 and 2;
Figure 4 is a sectional view of Figure 3, taken along the plane IV-IV;
Figure 5 is a chart that compares the efficiency of the deep-freezing apparatus according to the invention and of a conventional deep-freezing apparatus.

With reference to the cited figures, the deep-freezing apparatus according to the invention, generally designated by the reference numerals 1a and 1b in its two embodiments, comprises a tunnel-like structure 2 that forms internally a deep-freezing chamber 3, which has an inlet 4 for the products 20 to be frozen and an outlet 5 for the frozen products.

The deep-freezing apparatus also comprises a conveyor 6 for the products 20 to be frozen, which runs from the inlet 4 to the outlet 5 of the deep-freezing chamber 3.

The conveyor 6 can be constituted by a conveyor of a known type, such as for example a belt conveyor, and forms a preferably horizontal surface for supporting and moving the products 20 to be frozen along an advancement direction indicated by the arrow 7.

In the deep-freezing chamber 3 there are, in a per se known manner, main dispensing means and distribution means for a cryogenic gas, preferably constituted by nitrogen.

The main dispensing means can be constituted by nozzles 8 for dispensing the cryogenic gas, which are connected to a suitable line for supplying the cryogenic gas.

According to the invention, the cryogenic gas distribution means comprise at least one fan 9, 10, which is provided with a dispensing outlet 11 and 12 that is arranged above the conveyor 6 and is suitable to dispense a jet of gas that is orientated substantially at right angles to the surface for supporting and moving the products 20 formed by the conveyor 6.

The dispensing outlet 11 and 12 is shaped so that the jet of gas released through it is laminar and orientated at right angles to the advancement direction 7.

The fan 9, 10 is preferably constituted by a centrifugal or tangential fan, differently from the fans usually used in deep-freezing apparatuses, which are of the axial type.

In this manner, differently from the distribution means provided in the deep-freezing chambers of known types of tunnel-like apparatus, which generate turbulence inside the deep-freezing chamber with high speeds of the cryogenic gas but in uncontrolled directions, there is a more direct effect of the cryogenic gas on the products 20 arranged on the conveyor 6.

The means for distributing cryogenic gas comprise at least one module, generally designated by the reference numeral 21 and constituted by a box-like body 22, which is accommodated in the deep-freezing chamber 3 and is spaced upward with respect to the conveyor 6. The box-like body 22 has at least one inlet 23, 24, which is directed toward the conveyor 6, and two dispensing outlets 11 and 12, which are orientated toward the conveyor 6. The two dispensing outlets 11 and 12 are mutually spaced along the advancement direction 7 and are shaped so that each one dispenses a jet of gas that is laminar and orientated substantially at right angles to the advancement direction 7 and to the surface formed by the conveyor 6.

Preferably, the box-like body 22 has two inlets 23 and 24, and at each inlet 23 and 24 there is a corresponding fan 9 and 10, which can be operated in order to aspirate cryogenic gas from the deep-freezing chamber 3 through the corresponding inlet 23 and 24 and dispense it back into the deep-freezing chamber 3 through the dispensing outlets 11 and 12.

Depending on the requirements and on the length of the deep-freezing chamber 3, it is possible to provide multiple modules 21 of this kind for distributing the cryogenic gas within the deep-freezing chamber 3.

In the box-like body 22, along the path from the inlet or inlets 23 and 24 to the dispensing outlets 11 and 12 there are guiding partitions 25 for the stream of cryogenic gas generated by the fan or fans 9 and 10.

Advantageously, at least proximate to the inlet 4 there are auxiliary gas dispensing means 13a and 13b, which are suitable to form at least one gaseous barrier that effectively contrasts the entry of air that arrives from the outside environment into the deep-freezing chamber 3.

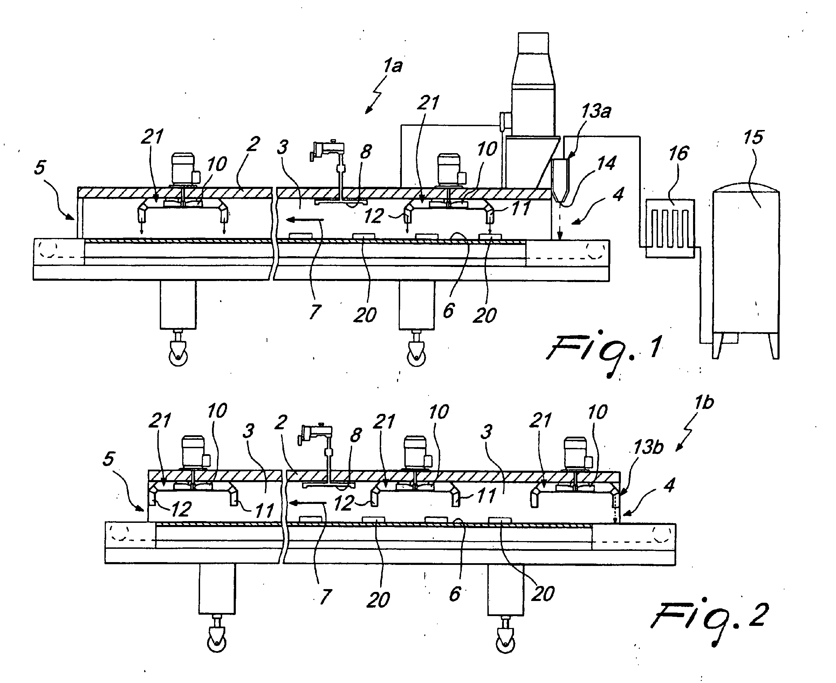

The auxiliary dispensing means 13a, shown in Figure 1, comprise at least one dispensing outlet 14, which is shaped so as to dispense a laminar jet of gas.

Preferably, the dispensing outlet 14 faces in an upward region the surface formed by the conveyor 6 and the jet of gas released by said dispensing outlet 14 is, as mentioned, laminar and orientated transversely to the advancement direction 7 and substantially at right angles to the surface for supporting and moving the products formed by the conveyor 6.

As an alternative, the auxiliary dispensing means, instead of being provided with a mouth that is shaped so as to deliver a single laminar jet, can also be constituted by multiple nozzles arranged side by side, which are equally capable of generating a gaseous barrier.

Optionally, instead of providing a single dispensing outlet 14 proximate to the inlet 4 and optionally proximate to the outlet 5, it is possible to provide two dispensing outlets 14 that are mutually spaced along the advancement direction 7, so as to generate two gaseous barriers that are mutually parallel and substantially perpendicular to the advancement direction 7 and are arranged sequentially along the advancement direction 7, so as to increase the effectiveness in contrasting the inflow of humid air into the freezing chamber 3.

Conveniently, it is possible to provide auxiliary dispensing means also proximate to the outlet 5, so as to provide the deep-freezing chamber 3 with two gaseous "gates" that close both the inlet 4 and the outlet 5.

The gas dispensed by the auxiliary dispensing means is preferably constituted by a cryogenic gas, preferably nitrogen, or carbon dioxide or argon, but might also be constituted by air with controlled humidity, i.e., adequately dehumidified and/or cooled.

If the gas dispensed by the auxiliary dispensing means is constituted by air with controlled humidity, it is possible to provide a supply line that draws air from the environment and, after adequately reducing the humidity contained therein by way of devices of a known type, feeds it to the auxiliary dispensing means, optionally after cooling.

If the gas dispensed by the auxiliary dispensing means is constituted by a cryogenic gas, such gas can be fed to the auxiliary dispensing means by virtue of an appropriately provided supply line which, as shown in Figure 1, comprises a storage tank 15 and optionally an evaporator 16, which supply the auxiliary dispensing means 13a.

If the gas dispensed by the auxiliary dispensing means is constituted by the same cryogenic gas that is fed to the main dispensing means arranged in the deep-freezing chamber 3, the auxiliary dispensing means can be fed simply by means of a branch of the supply line of the main dispensing means, or, as shown in Figure 2, it is possible to draw the gas to be fed to the auxiliary dispensing means 13b directly from the deep-freezing chamber 3.

More particularly, by arranging one of the modules 21 with a dispensing outlet 11 or 12 proximate to the inlet 4 or outlet 5, said module 21 also constitutes the auxiliary dispensing means 13b, since it can be used to generate, with said dispensing outlet 11 or 12, the gaseous barrier that contrasts the inflow of air toward the inside of the deep-freezing chamber 3.

The operation of the deep-freezing apparatus according to the invention is as follows.

The products 20 to be deep-frozen are deposited onto the conveyor 6, whose actuation introduces the products 20 in the deep-freezing chamber 3 through the inlet 4 and gradually makes them advance toward the outlet 5.

Proximate to the inlet 4, the auxiliary dispensing means 13a and 13b generate at least one gaseous barrier, which constitutes a "gate" which, by being gaseous, can be crossed without problems by the products 20 but contrasts effectively the infiltration of humid air that arrives from the environment into the deep-freezing chamber 3.

It should be noted that the gas dispensed by the auxiliary dispensing means 13a and 13b, in addition to producing such gaseous "gate", upon the passage of the products 20 also performs a sort of washing of the products 20, removing from them any stratifications of humid air in the vicinity of said products.

If provided, the auxiliary dispensing means located proximate to the outlet 5 further increase safety against the infiltration of humid air also through said outlet 5 without hindering the exit of the frozen products 20 from the deep-freezing chamber 3.

During transit in the deep-freezing chamber 3, the products 20 are struck by the cryogenic gas, conveyed by the distribution means, which causes their deep freezing. The distribution means, by way of the fact that according to the invention they emit a jet of cryogenic gas that is orientated at right angles to the plane formed by the conveyor 6 and is laminar, achieve higher effectiveness in the heat exchange that causes the deep-freezing of the products 20.

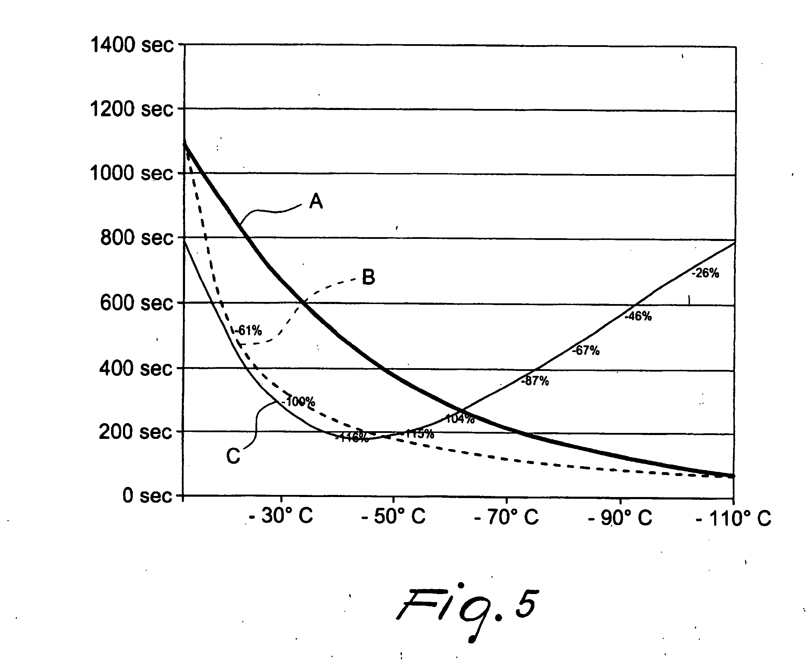

Figure 5 illustrates the comparison between the cooling efficiency of a deep-freezing apparatus of the conventional type and the cooling efficiency of an apparatus according to the invention. More particularly, the axis of the abscissas plots the deep-freezing temperatures and the axis of the ordinates plots the times required to reach these temperatures. The curve A relates to the behavior of a deep-freezing apparatus of the conventional type, while the curve B refers to the behavior of an apparatus according to the invention. The curve C plots the percentage difference between the curves B and A. As can be noted, in the temperature range between -20 and -110 °C, the apparatus according to the invention ensures higher cooling efficiency as a function of time, and in the temperature range usually used to deep-freeze food products, i.e., between -30 and -80 °C, the higher efficiency is particularly significant.

In practice it has been found that the deep-freezing apparatus according to the invention fully achieves the intended aim, since it is capable of achieving, in the heat exchange between the cryogenic gas and the products to be frozen, a higher efficiency than obtainable with apparatuses of a known type, thus allowing to save time and/or consumption of cryogenic gas.

Another advantage of the deep-freezing apparatus according to the invention is that it avoids effectively, or in any case limits considerably, infiltrations of humid air inside the deep-freezing chamber, thus achieving deep-freezing of the products without forming frost, which maintains the natural appearance of the products as much as possible.

The deep-freezing apparatus thus conceived is susceptible of numerous modifications and variations, all of which are within the scope of the inventive concept; all the details may further be replaced with other technically equivalent elements.

In practice, the materials used, as well as the contingent shapes and dimensions, may be any according to requirements and to the state of the art.

The disclosures in Italian Patent Application no. MI2002A001394, from which this application claims priority, are referred to.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A deep-freezing apparatus, comprising a tunnel-like structure (2) that forms internally a deep-freezing chamber (3) that is provided with an inlet (4) and with an outlet (5) and a conveyor (6) for the products to be deep-frozen which runs from said inlet (4) to said outlet (5) and forms a surface for supporting and moving the products (20) to be frozen along an advancement direction (7), said deep-freezing chamber (3) being provided internally with main dispenser means (8) and with means for distributing a cryogenic gas, said means for distributing a cryogenic gas comprising at least one fan (9, 10) that is provided with a dispensing outlet (11, 12) that is arranged above said conveyor (6) and is suitable to dispense a jet of gas that is orientated substantially at right angles to said surface for supporting and moving the products (20), **characterized in that** said means for distributing cryogenic gas comprise at least one module (21), which comprises a box-like body (22) that is accommodated in said deep-freezing chamber (3) and is spaced upward with respect to said conveyor (6), said box-like body (22) having at least one inlet (23, 24) that is directed toward said conveyor (6) and two dispensing outlets (11, 12) that are orientated toward said conveyor (6), said two dispensing outlets (11, 12) being mutually spaced along said advancement direction (7) and being shaped so that each one can dispense a laminar jet of gas that is orientated substantially at right angles to said advancement direction (7) and to the plane formed by said conveyor (6), a fan (9, 10) being arranged at said inlet (23, 24) and being actuatable in order to aspirate cryogenic gas from said deep-freezing chamber (3) through said inlet (23, 24) and dispense it again into said deep-freezing chamber (3) through said dispensing outlets (11, 12), partitions (25) for guiding the stream of cryogenic gas generated by said fan (9, 10) being arranged in said box-like body (22), along the path that runs from said inlet (23, 24) to said dispensing outlets (11, 12).

2. The deep-freezing apparatus according to claim 1, **characterized in that** said fan (9, 10) is a centrifugal or tangential fan.

3. The deep-freezing apparatus according to one or more of the preceding claims, **characterized in that** it comprises, at least proximate to said inlet (4), auxiliary dispensing means (13a, 13b) for a gas, which are suitable to form at least one gaseous barrier that contrasts the inflow of air from the outside environment into the deep-freezing chamber (3).

4. The deep-freezing apparatus according to claim 3, **characterized in that** said auxiliary dispensing means (13a, 13b) comprise at least one dispensing outlet (14) that is shaped so as to deliver a laminar jet of gas.

5. The deep-freezing apparatus according to claim 4, **characterized in that** said laminar gas jet dispensed by said auxiliary dispensing means (13a, 13b) is orientated transversely to said advancement direction (7) and substantially at right angles to said surface for supporting and moving the products (20).

6. The deep-freezing apparatus according to any one of claims 3 and 5, **characterized in that** said gas is constituted by a cryogenic gas.

7. The deep-freezing apparatus according to any one of claims 3 to 6, **characterized in that** said gas is constituted by the same cryogenic gas dispensed by said main dispensing means in said deep-freezing chamber (3).

8. The deep-freezing apparatus according to any one of claims 3 to 7, **characterized in that** said gas is constituted by dehumidified and/or cooled ambient air.

9. The deep-freezing apparatus according to any one of claims 3 to 8, **characterized in that** said auxiliary dispensing means (13a, 13b) are arranged both proximate to said inlet (4) and proximate to said outlet (5).

10. The deep-freezing apparatus according to one or more of the preceding claims, **characterized in that** said auxiliary dispensing means (13a, 13b) comprise at least one module (21), which comprises a box-like body (22) that is accommodated in said deep-freezing chamber (3) and is spaced upward with respect to said conveyor (6), said box-like body (22) having at least one inlet (23, 24) that is directed toward said conveyor (6) and two dispensing outlets (11, 12) that are orientated toward said conveyor (6), said two dispensing outlets (11, 12) being mutually spaced along said advancement direction (7) and being shaped so that each one can dispense a laminar jet of gas that is orientated substantially at right angles to said advancement direction (7) and to the plane formed by said conveyor (6), a fan (9,10) being arranged at said inlet (23, 24) and being actuatable in order to aspirate cryogenic gas from said deep-freezing chamber (3) through said inlet (23, 24) and dispense it again into said deep-freezing chamber (3) through said dispensing outlets (11, 12).

11. The deep-freezing apparatus according to one or more of the preceding claims, **characterized in that** at least one of said dispensing outlets (11, 12) of said box-like body (22) is arranged proximate to said inlet (4) or said outlet (5) of the deep-freezing chamber.

12. The deep-freezing apparatus according to claim 10, **characterized in that** partitions (25) for guiding the stream of cryogenic gas generated by said fan (9, 10) are arranged in said box-like body (22), along the path that runs from said inlet (23, 24) to said dispensing outlets (11, 12).

## Patentansprüche

1. Eine Tiefkühlvorrichtung, umfassend eine tunnelähnliche Struktur (2), die im Inneren eine Tiefkühlkammer (3) bildet, die mit einer Einlassöffnung (4) und mit einer Auslassöffnung (5) und einer Fördervorrichtung (6) für die Tiefkühlprodukte (20) bereitgestellt ist, welche von der Einlassöffnung (4) zur Auslassöffnung (5) verläuft und eine Oberfläche zum Tragen und Bewegen der Tiefkühlprodukte (20) entlang einer Beförderungsrichtung (7) bildet, wobei die Tiefkühlkammer (3) innenseitig mit Hauptabgabemitteln (8) und mit Mitteln zur Abgabe eines kryogenen Gases bereitgestellt ist, die Mittel zur Abgabe eines kryogenen Gases mindestens einen Ventilator (9, 10) umfassend, der mit einem Abgabeauslass (11, 12) bereitgestellt ist, der über der Fördervorrichtung (6) angeordnet ist und geeignet ist einen Gasstrahl abzugeben, der im Wesentlichen senkrecht zur Oberfläche zum Tragen und Bewegen der Produkte (20) gerichtet ist, **dadurch gekennzeichnet, dass** die Mittel zur Kryogasabgabe mindestens ein Modul (21) umfassen, welches ein kastenähnliches Gehäuse (22) umfasst, das in der Tiefkühlkammer (3) untergebracht ist und in Bezug auf die Fördervorrichtung (6) nach oben beabstandet ist, wobei das kastenähnliche Gehäuse (22) mindestens einen Einlass (23, 24), der auf die Fördervorrichtung (6) gerichtet ist, und zwei Abgabeauslässe (11, 12), die auf die Fördervorrichtung (6) ausgerichtet sind, wobei die zwei Abgabeauslässe (11, 12) gegenseitig beabstandet und entlang der Beförderungsrichtung (7) ausgebildet sind, damit jeder einen laminaren Gasstrahl abgeben kann, der im Wesentlichen senkrecht zur Beförderungsrichtung (7) und zur von der Fördervorrichtung (6) geformten Ebene ausgerichtet ist, wobei ein Ventilator (9, 10) an dem Einlass (23, 24) angeordnet und betätigbar ist, um kryogenes Gas von der Tiefkühlkammer (3) durch den Einlass (23, 24) anzusaugen und es durch die Abgabeauslässe (11, 12) wieder in die Tiefkühlkammer (3) abzugeben, wobei Trennwände (25) zur Führung des vom Ventilator (9, 10) erzeugten kryogenen Gasstrahls in dem kastenähnlichen Gehäuse (22) entlang der Strecke, die vom Einlass (23, 24) bis zu den Abgabeauslässen (11, 12) verläuft, angeordnet sind.

2. Die Tiefkühlvorrichtung gemäß Anspruch 1, **dadurch gekennzeichnet, dass** der Ventilator (9, 10) ein zentrifugaler oder tangentialer Ventilator ist.

3. Die Tiefkühlvorrichtung gemäß einem oder mehreren der vorhergehenden Ansprüche, **dadurch gekennzeichnet, dass** sie, zumindest nahe der Einlassöffnung (4), Hilfsabgabemittel (13a, 13b) für ein Gas umfasst, welche geeignet sind mindestens eine Gasbarriere zu bilden, die dem Luftzustrom von der Außenumgebung in die Tiefkühlkammer (3) entgegensteht.

4. Die Tiefkühlvorrichtung gemäß Anspruch 3, **dadurch gekennzeichnet, dass** die Hilfsabgabemittel (13a, 13b) mindestens einen Abgabeauslass (14) umfassen, der so geformt ist, um einen laminaren Gasstrahl zu liefern.

5. Die Tiefkühlvorrichtung gemäß Anspruch 4, **dadurch gekennzeichnet, dass** der von den Hilfsabgabemitteln (13a, 13b) abgegebene Laminargasstrahl quer zur Beförderungsrichtung (7) und im Wesentlichen rechtwinklig zur Oberfläche zum Tragen und Bewegen der Produkte (20) ausgerichtet ist.

6. Die Tiefkühlvorrichtung gemäß irgendeinem der Ansprüche 3 und 5, **dadurch gekennzeichnet, dass** das Gas aus einem kryogenen Gas besteht.

7. Die Tiefkühlvorrichtung gemäß irgendeinem der Ansprüche 3 bis 6, **dadurch gekennzeichnet, dass** das Gas aus dem gleichen kryogenen Gas besteht, das von den Hauptabgabemitteln in der Tiefkühlkammer (3) abgegeben wird.

8. Die Tiefkühlvorrichtung gemäß irgendeinem der Ansprüche 3 bis 7, **dadurch gekennzeichnet, dass** das Gas aus entfeuchteter und/oder gekühlter Umgebungsluft gebildet ist.

9. Die Tiefkühlvorrichtung gemäß irgendeinem der Ansprüche 3 bis 8, **dadurch gekennzeichnet, dass** die Hilfsabgabemittel (13a, 13b) sowohl nahe an der Einlassöffnung (4), als auch nahe an der Auslassöffnung (5) angeordnet sind.

10. Die Tiefkühlvorrichtung gemäß einem oder mehreren der vorhergehenden Ansprüche, **dadurch gekennzeichnet, dass** die Hilfsabgabemittel (13a, 13b) mindestens ein Modul (21) umfassen, welches ein kastenähnliches Gehäuse (22) umfasst, der in der Tiefkühlkammer (3) untergebracht ist und in Bezug auf die Fördervorrichtung (6) nach oben beabstandet ist, das kastenähnliche Gehäuse (22) mindestens einen Einlass (23, 24), der in Richtung der Fördervorrichtung (6) weist und zwei Abgabeauslässe (11, 12), die in Richtung der Fördervorrichtung ausgerichtet sind, aufweisend, wobei die zwei Abgabeauslässe (11, 12) entlang der Beförderungsrichtung (7) gegenseitig beabstandet sind und so ausgebildet sind, damit jeder einen laminaren Gasstrahl abgeben kann, der im Wesentlichen rechtwinklig zu der Beförderungsrichtung (7) und zu der von der Fördervorrichtung (6) gebildeten Ebene ist, wobei ein Ventilator (9, 10) an dem Einlass (23, 24) angeordnet und betätigbar ist, um kryogenes Gas von der Tiefkühlkammer (3) durch den Einlass (23, 24) anzusaugen und es durch die Abgabeauslässe (11, 12) wieder in die Tiefkühlkammer (3) abzugeben.

11. Die Tiefkühlvorrichtung gemäß einem oder mehreren der vorhergehenden Ansprüche, **dadurch gekennzeichnet, dass** mindestens einer der Abgabeauslässe (11, 12) des kastenähnlichen Gehäuses (22) nahe der Einlassöffnung (4) oder der Auslassöffnung (5) der Tiefkühlkammer angeordnet ist.

12. Die Tiefkühlvorrichtung gemäß Anspruch 10, **dadurch gekennzeichnet, dass** Trennwände (25) zur Leitung des vom Ventilator (9, 10) erzeugten kryogenen Gasstrahls in dem kastenähnlichen Gehäuse (22) angeordnet sind, entlang der Strecke, die vom Einlass (23, 24) zu den Abgabeauslässen (11, 12) verläuft.

## Revendications

1. Appareil de congélation, comprenant une structure en forme de tunnel (2) qui forme intérieurement une chambre de congélation (3) qui est pourvue d'une entrée (4) et d'une sortie (5) et d'un convoyeur (6) pour les produits à congeler qui court depuis ladite entrée (4) jusqu'à ladite sortie (5) et qui forme une surface pour le support et le déplacement des produits (20) à congeler le long d'une direction d'avancement (7), ladite chambre de congélation (3) étant pourvue intérieurement de moyens de distribution principaux (8) et de moyens de distribution de gaz cryogénique, lesdits moyens de distribution de gaz cryogénique comprenant au moins un ventilateur (9, 10) qui est pourvu d'une sortie de distribution (11, 12) qui est agencée au-dessus dudit convoyeur (6) et est appropriée à distribuer un jet de gaz qui est orienté sensiblement à angle droit par rapport à ladite surface de support et de déplacement des produits (20), **caractérisé en ce que** lesdits moyens de distribution de gaz cryogénique comprennent au moins un module (21), qui comprend un corps en forme de boîtier (22) qui est logé dans ladite chambre de congélation (3) et qui est espacé vers le haut par rapport audit convoyeur (6), ledit corps en forme de boîtier (22) présentant au moins une entrée (23, 24) qui est dirigée vers ledit convoyeur (6) et deux sorties de distribution (11, 12) qui sont orientées vers ledit convoyeur (6), lesdites deux sorties de distribution (11, 12) étant mutuellement espacées le long de ladite direction d'avancement (7) et étant conformées de façon à ce que chacune puisse distribuer un jet laminaire de gaz qui est orienté sensiblement à angle droit par rapport à ladite direction d'avancement (7) et par rapport au plan formé par ledit convoyeur (6), un ventilateur (9, 10) étant agencé à ladite entrée (23, 24) et étant actionnable afin d'aspirer le gaz cryogénique depuis ladite chambre de congélation (3) à travers ladite entrée (23, 24) et de le distribuer à nouveau dans ladite chambre de congélation (3) à travers lesdites sorties de distribution (11, 12), des séparations (25) pour guider le flux de gaz cryogénique généré par ledit ventilateur (9, 10) étant agencées dans ledit corps en forme de boîtier (22), le long de la trajectoire qui court depuis ladite entrée (23, 24) jusqu'aux dites sorties de distribution (11, 12).

2. Appareil de congélation selon la revendication 1, **caractérisé en ce que** ledit ventilateur (9, 10) est un ventilateur tangentiel ou centrifuge.

3. Appareil de congélation selon une ou plusieurs des revendications précédentes, **caractérisé en ce qu'**il comprend, au moins à proximité de ladite entrée (4), des moyens de distribution auxiliaires (13a, 13b) pour un gaz, qui sont appropriés à former au moins une barrière gazeuse qui contraste l'entrée d'air depuis l'environnement externe dans la chambre de congélation (3).

4. Appareil de congélation selon la revendication 3, **caractérisé en ce que** lesdits moyens de distribution auxiliaires (13a, 13b) comprennent au moins une sortie de distribution (14) qui est conformée de sorte à délivrer un jet laminaire de gaz.

5. Appareil de congélation selon la revendication 4, **caractérisé en ce que** ledit jet laminaire de gaz distribué par lesdits moyens de distribution auxiliaires (13a, 13b) est orienté transversalement à ladite direction d'avancement (7) et sensiblement à angle droit par rapport à ladite surface de support et de déplacement des produits (20).

6. Appareil de congélation selon l'une quelconque des revendications 3 et 5, **caractérisé en ce que** ledit gaz est constitué par un gaz cryogénique.

7. Appareil de congélation selon l'une quelconque des revendications 3 à 6, **caractérisé en ce que** ledit gaz est constitué par le même gaz cryogénique distribué par lesdits moyens de distribution principaux dans ladite chambre de congélation (3).

8. Appareil de congélation selon l'une quelconque des revendications 3 à 7, **caractérisé en ce que** ledit gaz est constitué par l'air ambiant refroidi et/ou déshumidifié.

9. Appareil de congélation selon l'une quelconque des revendications 3 à 8, **caractérisé en ce que** lesdits moyens de distribution auxiliaires (13a, 13b) sont agencés tous les deux à proximité de ladite entrée (4) et à proximité de ladite sortie (5).

10. Appareil de congélation selon une ou plusieurs des revendications précédentes, **caractérisé en ce que** lesdits moyens de distribution auxiliaires (13a, 13b) comprennent au moins un module (21), qui comprend un corps en forme de boîtier (22) qui est logé dans ladite chambre de congélation (3) et qui est espacé vers le haut par rapport audit convoyeur (6), ledit corps en forme de boîtier (22) présentant au moins une entrée (23, 24) qui est dirigée vers ledit convoyeur (6) et deux sorties de distribution (11, 12) qui sont orientées vers ledit convoyeur (6), lesdites deux sorties de distribution (11, 12) étant mutuellement espacées le long de ladite direction d'avancement (7) et étant conformées de façon à ce que chacune puisse distribuer un jet laminaire de gaz qui est orienté sensiblement à angle droit par rapport à ladite direction d'avancement (7) et par rapport au plan formé par ledit convoyeur (6), un ventilateur (9, 10) étant agencé à ladite entrée (23, 24) et étant actionnable afin d'aspirer le gaz cryogénique depuis ladite chambre de congélation (3) à travers ladite entrée (23, 24) et de le distribuer à nouveau dans ladite chambre de congélation (3) à travers lesdites sorties de distribution (11, 12).

11. Appareil de congélation selon une ou plusieurs des revendications précédentes, **caractérisé en ce qu'**au moins une desdites sorties de distribution (11, 12) dudit corps en forme de boîtier (22) est agencée à proximité de ladite entrée (4) ou de ladite sortie (5) de ladite chambre de congélation.

12. Appareil de congélation selon la revendication 10, **caractérisé en ce que** des séparations (25) pour guider le flux de gaz cryogénique généré par ledit ventilateur (9, 10) sont agencées dans ledit corps en forme de boîtier (22), le long de la trajectoire qui court depuis ladite entrée (23, 24) jusqu'aux dites sorties de distribution (11, 12).
